# EUROPÄISCHE PATENTSCHRIFT

(11) **EP 4 245 908 B1**
(45) Veröffentlichungstag und Bekanntmachung des Hinweises auf die Patenterteilung: **08.04.2026**
(21) Anmeldenummer: 23157729.7
(22) Anmeldetag: 21.02.2023
(51) Int. Cl.: D06F 39/14

(54) **HAUSHALTSGERÄT**
HOUSEHOLD APPLIANCE
APPAREIL MÉNAGER

(30) Priorität: 14.03.2022 DE 102022202485
(43) Veröffentlichungstag der Anmeldung: 20.09.2023
(73) Patentinhaber: BSH Hausgeräte GmbH, 81739 München (DE)
(72) Erfinder: Schmidt, Sebastian, 12159 Berlin (DE); Wang, Haotian, Nanjing, 210046 (CN); Jiang, Jianhui, Nanjing City, 210046 (CN)

(56) Entgegenhaltungen:
- EP-B1- 3 333 515
- CN-U- 208 395 504
- DE-A1- 102020 207 425
- KR-A- 20200 009 107
- US-A1- 2011 134 627

## Beschreibung

Die Erfindung betrifft ein Haushaltsgerät nach Anspruch 1 und ein Verfahren zum Herstellen eines Haushaltsgeräts mit einer Projektionsfläche nach Anspruch 10.

Im Dokument DE 10 2012 103 684 A1 ist ein Haushaltsgerät mit einem Gehäuse offenbart, das einen Projektor aufweist. Der Projektor ist im Gehäuse angeordnet und projiziert ein Projektionsbild auf eine Außenfläche des Gehäuses. Dem Projektor sind dabei insbesondere zwei Optiken zugeordnet, die einen vom Projektor ausgehenden Lichtstrahl derart umlenken, dass der Lichtstrahl in einen Innenraum eines Türelements des Haushaltsgeräts geleitet wird. Dabei wird ein Projektionsbild auf einer Innenoberfläche einer Sichtscheibe des Türelements projiziert.

In der US 2012/0327201 A1 ist eine weitere Toploader-Waschmaschine offenbart. Die Waschmaschine umfasst ein Deckelelement, wobei das Deckelelement eine Displayeinheit aufweist. Eine UV-Projektionseinheit ist in einem spoilerartig ausgebildeten Element, das in einem hinteren Bereich des Deckelelements der Waschmaschine, oberhalb des Deckelelements ausgebildet ist, angeordnet und projiziert ein Bild auf das Deckelelement.

Damit ein Projektionsbild gut darstellbar ist, ist es vorteilhaft eine selbstklebende Folie dort anzubringen, wo das Projektionsbild dargestellt werden soll. Eine derartige Folie, insbesondere eine selbstklebende Projektionsfolie, ist sehr teuer und ist in der Produktion sehr aufwändig zu verarbeiten.

Des Weiteren ist in der DE 10 2020 207 425 A1 ein Haushaltsgerät mit Projektionsfläche beschrieben, wobei die Projektionsfläche im Bereich des Sichtfensters ausgebildet ist.

In der US 2011/0134627 A1 ist ein Haushaltsgerät beschrieben, das ein integriertes Bedienpanel in einer Türeinheit aufweist

Es ist daher eine Aufgabe der Erfindung, ein Haushaltsgerät mit einer übersichtlichen und modernen Projektionsfläche zu schaffen, wobei verbesserte Eigenschaften hinsichtlich einer Flexibilität und Kostenreduzierung bereitgestellt werden sollen.

Die Aufgabe der Erfindung wird durch die Merkmale der unabhängigen Ansprüche 1 und 10 gelöst. Weitere vorteilhafte Ausgestaltungen der Erfindung sind in den Unteransprüchen angegeben sowie in der Beschreibung und den Zeichnungen.

Gemäß einem Aspekt der Erfindung wird die erfindungsgemäße Aufgabe durch ein Haushaltsgerät, insbesondere durch ein Haushaltsgerät mit einer Projektionsfläche gelöst. Das Haushaltsgerät umfasst ein Gehäuse mit einem Aufnahmebehälter und einer Öffnung. Des Weiteren umfasst das Haushaltsgerät eine Türeinheit, wobei die Türeinheit zum Verschließen der Öffnung vorgesehen ist, ein Sichtfenster, das im Wesentlichen in der Türeinheit angeordnet ist, wobei das Sichtfenster im Wesentlichen transparent ausgebildet ist, sodass der Aufnahmebehälter bei verschlossener Öffnung einsehbar ist, eine Projektionsfläche, wobei die Projektionsfläche im Bereich des Sichtfensters vorgesehen ist, und eine Frontwandbaugruppe, wobei die Frontwandbaugruppe mindestens ein Frontwandelement umfasst, wobei das Sichtfenster der Türeinheit und das mindestens eine Frontwandelement aus demselben Werkstück geformt sind und wobei auf dem Sichtfenster die Projektionsfläche mit einem Siebdruckverfahren erzeugbar ist, so dass die Projektionsfläche und das Sichtfenster im Wesentlichen weiterhin transparent sind.

Mit dem Siebdruckverfahren wird eine Art Film oder Schicht beziehungsweise Farbfilm oder Filmschicht auf dem Sichtfenster aufgebracht, der als Projektionsfläche dient. Die Bedruckungsintensität des Sichtfensters ist derart gewählt, dass das Sichtfenster beziehungsweise die aufgetragene Projektionsfläche im Wesentlichen transparent bleibt beziehungsweise ist, so dass ein Benutzer bei geschlossener Öffnung des Haushaltsgeräts, insbesondere eines fluidführenden Haushaltsgeräts, in den Aufnahmebehälter blicken kann. Des Weiteren ist ein Aufbringen einer Projektionsfläche auf dem Sichtfenster kostengünstig und kann problemlos in einer Fertigungsserie in einer Fabrik integriert werden. Des Weiteren können Materialkosten verringert werden, da ein Werkstück sowohl für das Sichtfenster als auch für das mindestens eine Frontwandelement verwendbar ist, so dass im Wesentlichen kein Materialabfall beim Erzeugen des Sichtfensters, wie das abgeschnittene Material, anfällt.

Das Haushaltsgerät kann ein fluidführendes Haushaltsgerät, wie beispielsweise eine Waschmaschine, ein Waschtrockner oder ein Wäschetrockner oder ein Geschirrspüler, ein Kaffeevollautomat und/oder ein Dampfgarer sein. Des Weiteren kann das Haushaltsgerät ein Backofen oder ein Herd oder eine Mikrowelle oder eine Wärmeschublade oder eine Dunstabzugshaube sein.

Als Projektionsfläche ist hier eine Fläche bezeichnet, auf der bei einer Projektion ein Urbild durch Strahlen abgebildet oder geworfen oder projiziert wird. Die Projektionsfläche kann auch als Projektionsschicht bezeichnet werden. Die Projektionsfläche wird mit dem Siebdruckverfahren auf dem Sichtfenster aufgetragen. Das bedeutet, dass die Projektionsfläche in Form einer Schicht auf dem Sichtfenster aufgetragen wird. Die Projektionsfläche ist vorzugsweise unlösbar beziehungsweise nicht lösbar an dem Sichtfenster angebracht.

Vorteilhafterweise sind das Sichtfenster und das mindestens eine Frontwandelement der Frontwandbaugruppe im Wesentlichen aus Glas und/oder im Wesentlichen aus mindestens einem Polymer gebildet, wobei das Sichtfenster und das mindestens eine Frontwandelement der Frontwandbaugruppe in einem unbearbeiteten Zustand im Wesentlichen farblos und durchsichtig sind.

Das bringt den Vorteil mit sich, dass das Werkstück als klares Material beziehungsweise als unbeschichtetes Werkstück bezogen werden kann, welches im Einkauf kostengünstiger als ein bereits beschichtetes Werkstück beziehungsweise ein beschichtetes Material ist.

Vorzugsweise sind an dem Sichtfenster im Wesentlichen ein Maskierungsrand, eine Tönungsschicht und die Projektionsfläche aufgetragen, wobei der Maskierungsrand im Randbereich des Sichtfensters angeordnet ist und umlaufend ausgebildet ist.

Der Maskierungsrand kann auch als abschließendes Element an dem Sichtfenster angesehen werden, der die Projektionsfläche des Sichtfensters der Türeinheit im Wesentlichen umfassend beziehungsweise umgebend ausgebildet ist. Der Maskierungsrand kann auch als kreisförmiges Element angesehen werden.

Die Tönungsschicht und/oder der Maskierungsrand des Sichtfensters sind vorteilhafterweise mit dem Siebdruckverfahren erzeugbar, wobei der Maskierungsrand im Wesentlichen blickdicht ist und wobei die Tönungsschicht im Wesentlichen transparent ausgebildet ist.

Der Markierungsrand ist dafür vorgesehen, Elemente zu verdecken die ein Nutzer nicht unbedingt sehen muss, wie beispielsweise Verbindungselemente wie Schrauben. Die Tönungsschicht hat vorwiegend einen designprägenden Nutzen. Die Tönungsschicht und/oder der Maskierungsrand werden mit dem Siebdruckverfahren schichtweise auf dem Sichtfenster aufgetragen. Das Siebdruckverfahren stellt dabei eine kostengünstige Variante des Bedruckens dar und bringt den Vorteil mit sich, dass nahezu alle Druckarbeiten in einer Maschine erfolgen können, vorzugsweise kurz nach einander.

Das Sichtfenster ist vorzugsweise an der Türeinheit anbringbar und das mindestens eine Frontwandelement der Frontwandbaugruppe ist vorzugsweise an dem Haushaltsgerät anbringbar.

Das Sichtfenster und das mindestens eine Frontwandelement der Frontwandbaugruppe sind aus demselben Werkstück gefertigt, wodurch im Wesentlichen kein Produktionsabfall entsteht, sondern im Wesentlichen das ganze Werkstück verwendet wird. Dadurch können Materialkosten niedrig gehalten werden und gleichzeitig wird ein umweltschonendes Verfahren bereitgestellt, bei dem entstehender Abfall vermieden wird.

Vorteilhafterweise ist die Tönungsschicht zumindest abschnittsweise auf dem Sichtfenster aufgetragen. Alternativ vorstellbar ist aber auch, dass sich die Tönungsschicht im Wesentlichen über das gesamte Sichtfenster erstreckt. Je nachdem, ob eine abschnittsweise Tönungsschicht oder ein im Wesentlichen vollständig getöntes Sichtfenster erwünscht ist, kann die Tönungsschicht unterschiedlich aufgetragen werden.

Vorzugsweise ist die Projektionsfläche zumindest abschnittsweise auf dem Sichtfenster aufgetragen. Alternativ vorstellbar ist aber auch, dass sich die Projektionsfläche im Wesentlichen über das gesamte Sichtfenster erstreckt. Dadurch kann eine Projektionsfläche an die individuellen Nutzeranforderungen angepasst werden und in unterschiedlichen Größen auf dem Sichtfenster aufgetragen werden.

Gemäß einem zweiten Aspekt der Erfindung wird die erfindungsgemäße Aufgabe durch ein Verfahren zum Erzeugen eines Haushaltsgeräts mit einer Projektionsfläche gelöst. Das Haushaltsgerät umfasst dabei im Wesentlichen ein Gehäuse mit einem Aufnahmebehälter und einer Öffnung, eine Türeinheit, ein Sichtfenster, eine Projektionsfläche und eine Frontwandbaugruppe mit mindestens ein Frontwandelement, wobei die Türeinheit zum Verschließen der Öffnung vorgesehen ist, wobei das Sichtfenster im Wesentlichen in der Türeinheit angeordnet ist und wobei das Sichtfenster im Wesentlichen transparent ausgebildet ist, sodass der Aufnahmebehälter bei verschlossener Öffnung einsehbar ist, wobei die Projektionsfläche im Bereich des Sichtfensters vorgesehen ist, und wobei das mindestens eine Frontwandelement an einer Vorderseite des Haushaltsgerät angeordnet ist, wobei das Verfahren zum Herstellen einer Projektionsfläche umfasst:
- Herauslösen des Sichtfensters aus dem mindestens einen Fronwandelement, so dass im Wesentlichen ein rundes Sichtfenster entsteht und das mindestens eine Frontwandelement die Öffnung aufweist,
- Aufbringen der Projektionsfläche auf dem Sichtfenster mit einem Siebdruckverfahren;
- Anbringen des Sichtfensters mit der aufgebrachten Projektionsfläche an der Türeinheit;
- Montieren der Türeinheit und des mindestens einen Frontwandelements an dem Haushaltsgerät.

Die Öffnung des Frontwandelements kann auch als Loch oder als Durchgangsöffnung verstanden werden.

Das Verfahren bringt den Vorteil mit sich, dass ein Aufbringen einer Projektionsfläche auf dem Sichtfenster kostengünstig ist und problemlos in einer Fertigungsserie in einer Fabrik integriert werden kann. Des Weiteren können Materialkosten verringert werden, da ein Werkstück sowohl für das Sichtfenster als auch für das mindestens eine Frontwandelement verwendbar ist, so dass im Wesentlichen kein Materialabfall beim Erzeugen des Sichtfensters, wie das abgeschnittene Material, anfällt. Des Weiteren sind die Fertigungsschritte stark vereinfacht, da das Bedrucken des Sichtfensters mit dem Siebdruckverfahren ein schneller und genauer Prozess ist, so dass das Sichtfensters im Anschluss an das Bedrucken gleich weiterverarbeitet werden kann.

Vorteilhafterweise umfasst das Sichtfenster eine Tönungsschicht, wobei die Tönungsschicht mit dem Siebdruckverfahren auf dem Sichtfenster aufgetragen wird. Denkbar ist aber auch, dass ein Maskierungsrand an dem Sichtfenster mit dem Siebdruckverfahren aufgetragen wird. Der Maskierungsrand ist umlaufend als Kreisbogen oder Kreisring auf dem Sichtfenster aufgetragen.

Mit dem Siebdruckverfahren können hohe Qualitätsanforderungen erzielt werden und gleichzeitig eine kostengünstige Produktion beziehungsweise Erzeugung einer Tönungsschicht und/oder eines Maskierungsrandes bereitgestellt werden. Des Weiteren können sowohl die Tönungsschicht als auch die Projektionsfläche und/oder der Maskierungsrand im gleichen Verfahren auf dem Sichtfenster aufgetragen werden, wodurch ein optimierter Fertigungsprozess erreicht wird.

Vorzugsweise werden die Tönungsschicht und die Projektionsfläche zumindest abschnittsweise auf dem Sichtfenster aufgetragen. Es ist denkbar, dass die Tönungsschicht auf das gesamte Sichtfenster aufgetragen wird. Des Weiteren ist denkbar, dass die Projektionsfläche auf das gesamte Sichtfenster aufgetragen wird. Damit eine bessere Anzeige eines Projektionsbildes erreicht wird, wird vorzugweise die Tönungsschicht vor der Projektionsfläche auf dem Sichtfenster aufgetragen. Mit anderen Worten gesagt, zunächst erfolgt ein Aufdrucken der Tönungsschicht und anschließend ein Aufdrucken der Projektionsfläche auf dem Sichtfenster. Beides erfolgt mit dem Siebdruckverfahren. Da die aufgedruckten Schichten, Tönungsschicht und die Projektionsschicht beziehungsweise Projektionsfläche, in einer jeweiligen sehr dünnen Farbschicht aufgetragen werden, härten beziehungsweise trocknen die jeweiligen aufgetragenen Schichten schnell aus.

Das mindestens eine Frontwandelement weist nach dem Herauslösen des Sichtfensters die Öffnung auf, wobei eine Beschichtung vor dem Montieren des mindestens einen Frontwandelements an dem Haushaltsgerät auf dem mindestens einen Frontwandelement aufgebracht wird. Die Öffnung kann auch als Durchgangsöffnung oder als Loch in dem Werkstück beziehungsweise des mindestens einen Frontwandelements bezeichnet werden. Die Öffnung des mindestens einen Frontwandelements ist in dem montierten Zustand des mindestens einen Frontwandelements dafür vorgesehen, dass die Türeinheit im Bereich der Öffnung angeordnet ist. Das mindestens eine Frontwandelement behält im Wesentlichen sein klares Material. Durch die Beschichtung wird das mindestens eine Frontwandelement jedoch undurchsichtig gestaltet, so dass ein Nutzer nicht durch das mindestens eine Frontwandelement blicken kann. Die Beschichtung des mindestens einen Frontwandelements erfolgt vorzugsweise an der Seite, die zum Aufnahmebehälter hin an dem Haushaltsgerät angeordnet ist.

Mit dem Siebdruckverfahren kann eine hohe Anzeigequalität auf der Projektionsfläche des Sichtfensters erreicht werden, wobei im Vergleich zu einer Projektionsfolie geringere Materialkosten und Produktionskosten entstehen. Im Siebdruckverfahren können mehrere Schichten gleichzeitig und/oder kurz nacheinander aufgetragen werden, wodurch weniger Produktionsschritte erforderlich sind. Des Weiteren kann mit dem Siebdruckverfahren ein sogenannter Farbausgleich vorgenommen werden, sodass ein gutes beziehungsweise besseres Darstellen des Projektionsbildes erreicht wird. Das bedeutet, im Siebdruckverfahren können auch weitere Farbtöne neben der Farbe Weiß, einer hellen Farbe, und einer dunklen Farbe zur Anwendung kommen und dadurch ein von einer Lichtquelle abgegebenes warmes Weißlicht in einem neutralen Weiß an der Projektionsfläche angezeigt werden. Dadurch wird eine Anzeigequalität auf der Projektionsfläche erhöht. Da das Siebdruckverfahren ein Auftragen von feinen Partikeln auf dem Sichtfenster ermöglicht, wird dadurch eine gleichmäßige Struktur erreicht, die bei einer direkten Bestrahlung, beispielsweise durch eine externe Lichtquelle, eine bessere Anzeigequalität des Projektionsbildes an dem Sichtfenster im Vergleich zu anderen Verfahren ermöglicht. Des Weiteren ist mit dem Siebdruckverfahren ein Aufbringen von verschieden Mustern möglich.

In der vorliegenden Anmeldung ist eine Projektion vorgesehen, die im Prinzip von hinten auf die Projektionsfläche auftrifft und das Bild für einen Benutzer, der vor dem Haushaltsgerät steht, lesbar ist. Bei vielen anderen Projektionsarten, am breitesten ist wohl die Rückprojektion verbreitet, werden Projektionsfolien verwendet. Eine Rückprojektion ist eine Projektion, die von vorne auf eine Projektionsfläche gestrahlt wird und von der Projektionsfläche wieder zurück zu einem Betrachtet reflektiert wird. Ein typisches Beispiel hierfür ist der Projektor oder Beamer in Kinosälen oder Besprechungsräumen.

Weitere Eigenschaften und Vorteile der vorliegenden Erfindung ergeben sich aus der nachfolgenden Beschreibung unter Bezugnahme auf die Zeichnungen.
- Fig. 1: zeigt eine Frontansicht eines fluidführenden Haushaltsgeräts;
- Fig. 2: zeigt eine Frontansicht eines Haushaltsgeräts;
- Fig. 3: zeigt eine Explosionszeichnung einer Türeinheit eines fluidführenden Haushaltsgeräts;
- Fig. 4: zeigt eine Schnittdarstellung einer Ausführungsform einer Türeinheit eines fluidführenden Haushaltsgeräts;
- Fig. 5: zeigt ein bedrucktes Sichtfenster einer Türeinheit eines fluidführenden Haushaltsgeräts;
- Fig. 6: zeigt ein fluidführendes Haushaltsgerät, mit einem internen Gerät und/oder einem externen Gerät;
- Fig. 7: zeigt schematisch ein Verfahren zum Herstellen eines Haushaltsgeräts mit einer Projektionsfläche.

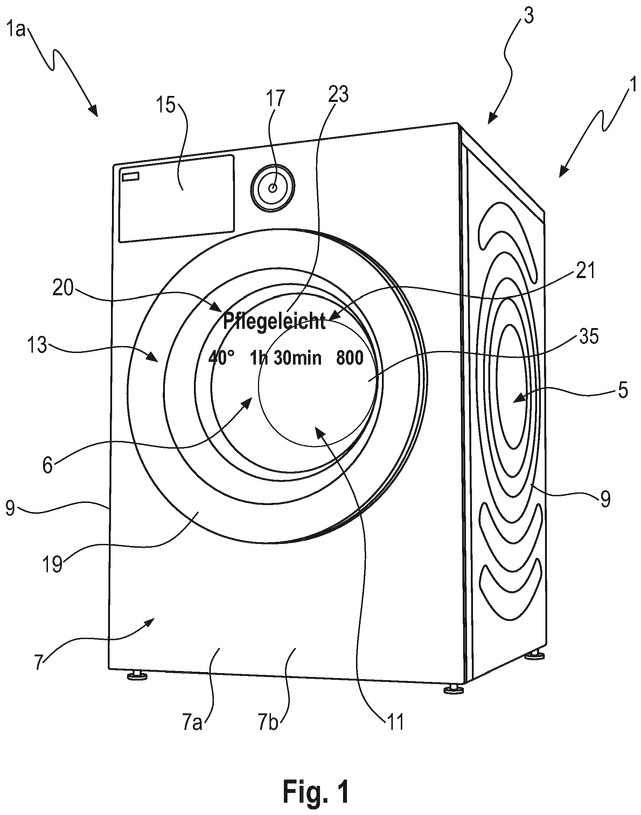

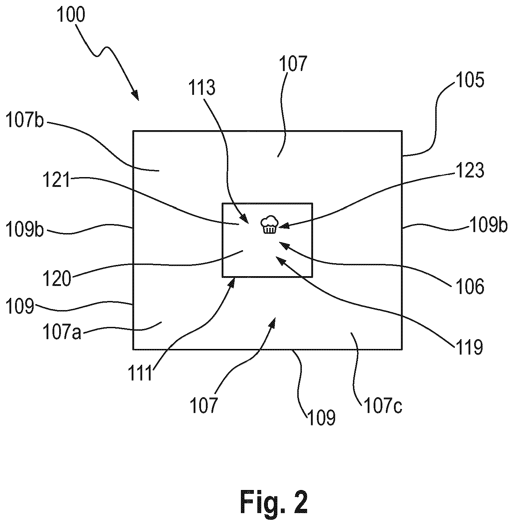

In Fig. 1 und in Fig. 2 ist jeweils eine Frontansicht eines Haushaltsgeräts 1 gezeigt. Insbesondere sind in Fig. 1 und Fig. 2 sogenannte Haushaltsgroßgeräte dargestellt.

Das in Fig. 1 gezeigte Haushaltsgerät 1 kann beispielsweise ein fluidführendes Haushaltsgerät 1a, wie beispielsweise ein Wäschepflegegerät 3, ein Geschirrspüler, ein Kaffeevollautomat oder ein Dampfgarer oder ein ähnliches fluidführendes Haushaltsgerät sein. Ein Wäschepflegegerät 3 kann unter anderem eine Waschmaschine, ein Waschtrockner oder ein Wäschetrockner sein.

Das in Fig. 2 gezeigte Haushaltsgerät 100 kann ein Backofen oder ein Herd oder eine Mikrowelle oder eine Wärmeschublade oder eine Dunstabzugshaube, insbesondere sogenannte Tischlüfter, die beispielsweise in einer Arbeitsplatte versenkbar sind, sein.

Die Begrifflichkeiten die im Folgenden genannt beziehungsweise benutzt werden, beziehen sich sowohl auf das Haushaltsgerät 1 und/oder auf das fluidführende Haushaltsgerät 1a als auch auf das Haushaltsgerät 100, das in Fig. 2 dargestellt ist.

Insbesondere ist in Fig. 1 ein fluidführendes Haushaltsgerät 1a gezeigt. Das beispielhaft dargestellte fluidführende Haushaltsgerät 1a ist ein Wäschepflegegerät 3. Im Folgenden, insbesondere in den Fig. 1, 3, 4 und 5, werden die Ausführungsbeispiele im Wesentlichen anhand des Wäschepflegegeräts 3 beschrieben.

Das Wäschepflegegerät 3 umfasst ein Gehäuse 5. In dem Gehäuse 5 ist ein Aufnahmebehälter 6 angeordnet, in dem im vorliegenden Ausführungsbeispiel im Wesentlichen zu reinigenden und/oder trocknenden Utensilien, beispielsweise Wäsche, aufgenommen werden. Das Gehäuse 5 weist eine Frontwandbaugruppe 7 mit mindestens einem Frontwandelement 7a und Seitenwände 9 auf, wobei die Frontwandbaugruppe 7 an einer Vorderseite 7b des Wäschepflegegeräts 3 angeordnet ist. Eine Öffnung 11 ist in dem mindestens einem Frontwandelement 7a des Gehäuses 5 ausgebildet. Die Öffnung 11 ist mit einer Türeinheit 13 verschließbar. Die Türeinheit 13 ist im Wesentlichen drehbar an dem Gehäuse 5 befestigt. Weiterhin ist in einem oberen Bereich der Vorderseite 7b des Wäschepflegegeräts 3 eine Einspülschale 15 angedeutet dargestellt. Neben der Einspülschale 15 ist in einem oberen Bereich der Vorderseite 7b des fluidführenden Haushaltsgeräts 1a ein kreisförmiges Betätigungselement 17 angeordnet. Das Betätigungselement 17 ist im vorliegenden Ausführungsbeispiel kreisförmig ausgebildet und kann auch als eine Art Druckknopf, Schalter oder dergleichen ausgestaltet sein. Das Betätigungselement 17 dient im Wesentlichen dazu, das Wäschepflegegerät 3 ein- oder auszuschalten und/oder zu starten und/oder gegebenenfalls Betriebsprogramme und/oder Betriebsparameter einzustellen.

Die Türeinheit 13 weist ein Sichtfenster 19 auf, wobei das Sichtfenster 19 auch als Sichtscheibe bezeichnet werden kann. Das Sichtfenster 19 ist im Wesentlichen transparent ausgebildet. Im Bereich des Sichtfenster 19 ist, wie im vorliegenden Ausführungsbeispiel in Fig. 1 dargestellt, eine Projektionsfläche 20 ausgebildet. Die Projektionsfläche 20 kann sich zumindest über einen Teilbereich 21 des Sichtfensters 19 beziehungsweise abschnittsweise über das Sichtfenster 19 erstrecken. Es ist aber auch denkbar, dass sich die Projektionsfläche 20 im Wesentlichen über das gesamte Sichtfenster 19 oder zumindest über einen großen Teil des Sichtfensters 19 erstreckt. Die Projektionsfläche 20 kann dafür vorgesehen sein, Projektionsbilder 23 anzuzeigen.

In Fig. 1 ist beispielhaft ein Projektionsbild 23 gezeigt. Das Projektionsbild 23 in Fig. 1 zeigt beispielhaft ein Waschprogramm namens 'Pflegeleicht' an, wobei weiterhin eine Waschgradzahl (40°), eine Restlaufzeit (1h30min) und eine Umdrehungsgeschwindigkeit (800 U/min) des Aufnahmebehälters 6 angezeigt wird. Es ist aber auch denkbar, dass noch weitere Informationen dargestellt werden können. Diese können neben den bereits genannten Informationen dargestellt werden oder auf einer weiteren Anzeigeebene, die sich beispielsweise auf der Projektionsfläche 20 öffnet, wenn beispielsweise ein Bedienprogramm ausgewählt wurde. Weiterhin ist vorstellbar, dass ein Benutzer über die Projektionsfläche 20 Einstellungen an dem Wäschepflegegerät 1 vornehmen kann. Des Weiteren ist denkbar, dass verschiedene Bilder und/oder Prozesse, wie beispielsweise Abläufe in dem Wäschepflegegerät 3, dargestellt werden. Weiterhin ist denkbar, dass Prozesse und/oder Bedienanweisungen oder Bedienhinweise an der Projektionsfläche 20 angezeigt werden.

In Fig. 2 ist ein Haushaltsgerät 100 gezeigt. Wie oben bereits erwähnt, kann das Haushaltsgerät 100 auch ein Backofen oder ein Herd oder eine Mikrowelle oder eine Wärmeschublade oder eine Dunstabzugshaube, insbesondere sogenannte Tischlüfter, die beispielsweise in einer Arbeitsplatte versenkbar sind, sein. Das Haushaltsgerät 100 umfasst ein Gehäuse 105. In dem Gehäuse 105 ist ein Aufnahmebehälter 106 angeordnet, wobei in dem Aufnahmebehälter 106 beispielsweise Speisen beziehungsweise Lebensmittel und/oder Viktualien aufgenommen werden. In einer Dunstabzugshaube werden überwiegend Wrasen aufgenommen beziehungsweise werden diese sogenannten Wrasen angezogen. Wrasen sind Dämpfe, die vorwiegend beim Backen und Kochen entstehen.

Das Gehäuse 105 umfasst weiterhin Seitenwände 109 beziehungsweise Wandelemente 109b und eine Frontwandbaugruppe 107 mit mindestens einem Frontwandelement 107a. Das mindestens eine Frontwandelement 107a ist an einer Vorderseite 107b des Haushaltsgeräts 100 angeordnet und umfasst eine Außenseite 107c. Eine Öffnung 111 ist in dem mindestens einen Frontwandelement 107a des Gehäuses 105 ausgebildet. Die Öffnung 111 ist mit einer Türeinheit 113 verschließbar. Die Türeinheit 113 ist im Wesentlichen drehbar an dem Gehäuse 105 befestigt. Es ist aber auch denkbar, dass die Türeinheit 113 kippbar und/oder schiebbar und/oder schwenkbar an dem Gehäuse 105 befestigt ist.

Die Türeinheit 113 weist ein Sichtfenster 119 mit einer Projektionsfläche 120 auf. Die Projektionsfläche 120 kann sich zumindest über einen Teilbereich 121 des Sichtfensters 119 der Türeinheit 113 beziehungsweise abschnittsweise über das Sichtfenster 119 der Türeinheit 113 erstrecken. Es ist aber auch denkbar, dass sich die Projektionsfläche 120 im Wesentlichen über die gesamte das Sichtfenster 119 der Türeinheit 113 oder zumindest über einen großen Teil des Sichtfensters 119 der Türeinheit 113 erstreckt. Die Projektionsfläche 120 kann dafür vorgesehen sein, Projektionsbilder 123 anzuzeigen. In Fig. 2 ist beispielhaft ein Muffin oder ein Kuchen als Projektionsbild 123 gezeigt. Es ist aber auch denkbar, dass noch weitere, Informationen dargestellt werden können. Diese können neben den bereits genannten Informationen dargestellt werden oder auf einer weiteren Anzeigeebene, die sich beispielsweise auf der Projektionsfläche 120 öffnet, wenn beispielsweise ein Bedienprogramm ausgewählt wurde. Weiterhin ist vorstellbar, dass ein Benutzer über die Projektionsfläche 120 Einstellungen an dem Haushaltsgerät 100 vornehmen kann. Des Weiteren ist denkbar, dass verschiedene Bilder und/oder Prozesse, wie beispielsweise Abläufe in dem Haushaltsgerät 100, dargestellt werden. Weiterhin denkbar ist, dass Prozesse und/oder Bedienanweisungen oder Bedienhinweise an der Projektionsfläche 120 angezeigt werden.

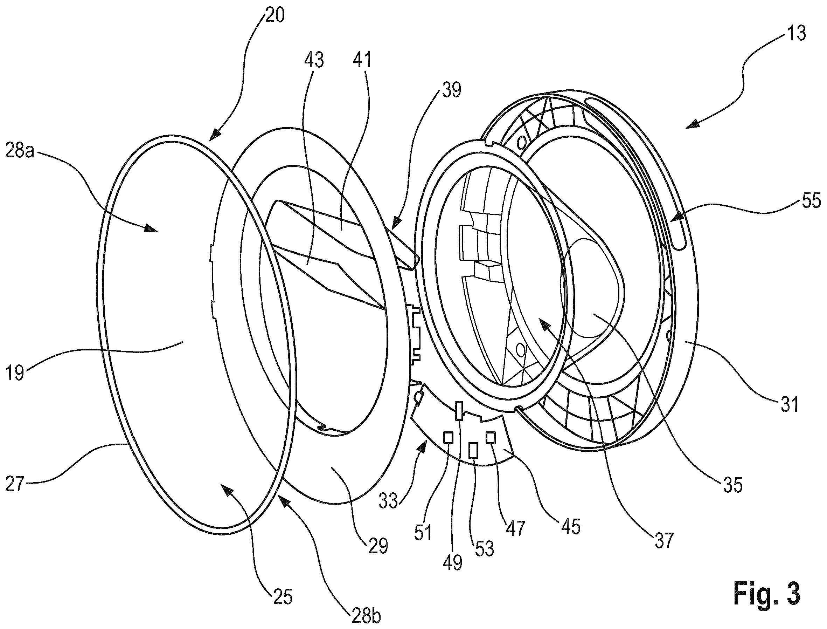

In Fig. 3 ist eine Explosionsdarstellung einer möglichen Ausführungsform einer Türeinheit 13 eines Wäschepflegegeräts 3 dargestellt. Die Türeinheit 13 umfasst das Sichtfenster 19, wobei das Sichtfenster 19 auch als Sichtscheibe bezeichnet werden kann. Das Sichtfenster 19 ist im Wesentlichen transparent ausgebildet. Im Bereich des Sichtfenster 19 ist die Projektionsfläche 20 vorgesehen. Die Projektionsfläche 20 kann sich zumindest über einen Teilbereich 21 des Sichtfensters 19 erstrecken. Es ist aber auch denkbar, dass sich die Projektionsfläche 20 im Wesentlichen über das gesamte Sichtfenster 19 oder zumindest über einen großen Teil des Sichtfensters 19 oder abschnittsweise über das Sichtfensters 19 erstreckt. Die Projektionsfläche 20 dient zum Anzeigen von Projektionsbildern 23. Des Weiteren kann das Sichtfenster 19 eine Tönungsschicht 25 aufweisen. Weiterhin ist vorstellbar, dass das Sichtfenster 19 einen Maskierungsrand 27 umfasst.

Die Projektionsfläche 20 und die Tönungsschicht 25 sind vorzugsweise an einer Innenseite 28a des Sichtfensters 19 ausgebildet. Der Maskierungsrand 27 kann an einer Außenseite 28b des Sichtfensters 19 oder an der Innenseite 28a des Sichtfensters 19 ausgebildet sein. Die Projektionsfläche 20 und die Tönungsschicht 25 werden mit dem Siebdruckverfahren an der Innenseite 28a des Sichtfensters 19 aufgebracht beziehungsweise aufgedruckt. Es ist auch vorstellbar, dass der Maskierungsrand 27 mit dem Siebdruckverfahren auf der Innenseite 28a oder der Außenseite 28b des Sichtfensters 19 aufgebracht beziehungsweise aufgedruckt wird.

Die Türeinheit 13 umfasst weiterhin ein erstes Rahmenelement 29, ein zweites Rahmenelement 31, eine Projektionseinheit 33 und ein Fensterelement 35. Das Fensterelement 35 ist im Wesentlichen zwischen dem ersten Rahmenelement 29 und dem zweiten Rahmenelement 31 angeordnet. Das Fensterelement 35 ist im Wesentlichen in dem zweiten Rahmenelement 31 aufgenommen. Das Sichtfenster 19 ist an dem ersten Rahmenelement 29 angeordnet. Das Fensterelement 35 und das Sichtfenster 19 sind im Wesentlichen gegenüberliegend angeordnet, wobei das Fensterelement 35 in einem geschlossenen Zustand der Türeinheit 13 in das Gehäuse 5, insbesondere in den Aufnahmebehälter 6 des Wäschepflegegeräts 3, hineinragt. Das Sichtfenster 19 ist in einem geschlossenen Zustand der Türeinheit 13 im Wesentlichen außerhalb des Gehäuses 5 des Wäschepflegegeräts 3 angeordnet. Zwischen dem Sichtfenster 19 und dem Fensterelement 35 ist ein Hohlraum 37 ausgebildet.

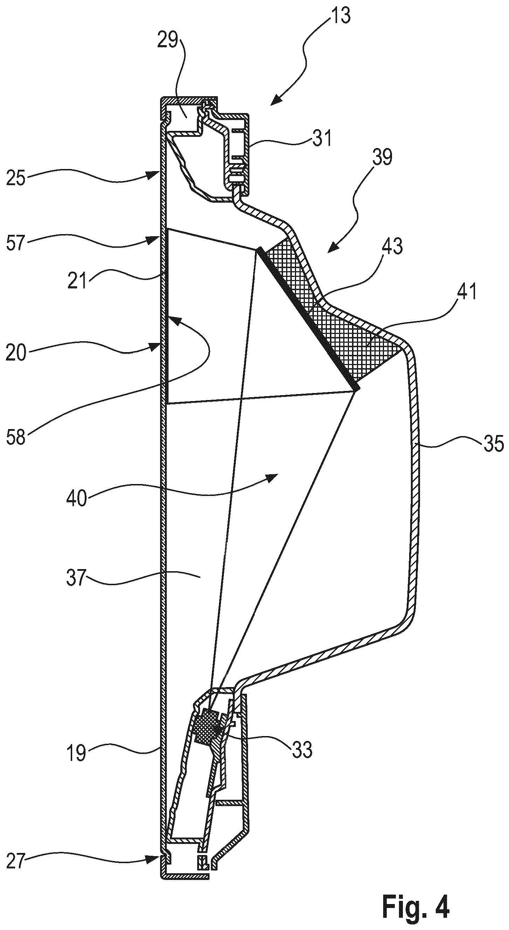

In dem Hohlraum 37 ist im Wesentlichen eine Optikeinheit 39 angeordnet. Die Optikeinheit 39 ist zum Leiten eines Lichtstrahls 40 (beispielhaft in Fig. 4 dargestellt) auf die Projektionsfläche 20 beziehungsweise auf den Teilbereich 21 des Sichtfensters 19 vorgesehen. Der Lichtstrahl 40 wird von der Projektionseinheit 33 generiert. Auf die Projektionseinheit 39 wird weiter unten näher eingegangen. Die Optikeinheit 39 umfasst im Wesentlichen ein Halteelement 41 und ein spiegelartiges Element 43. Die Optikeinheit 39 ist derart in dem Hohlraum 35 angeordnet, dass ein Bediener in einem geschlossenen Zustand der Türeinheit 13, vorzugsweise in den Aufnahmebehälter 6 des Wäschepflegegeräts 3 blicken kann. Das Halteelement 41 der Optikeinheit 39 ist in dem vorliegenden Ausführungsbeispiel an dem ersten Rahmenelement 29 angeordnet.

Die Projektionseinheit 33 ist vorzugsweise zwischen dem ersten Rahmenelement 29 und dem zweiten Rahmenelement 31 angeordnet. Die Projektionseinheit 33 ist vorzugsweise in einem unteren Bereich der Türeinheit 13 zwischen dem ersten Rahmenelement 29 und dem zweiten Rahmenelement 31 angeordnet. Die Projektionseinheit 33 kann entweder an dem ersten Rahmenelement 29 und/oder an dem zweiten Rahmenelement 31 angebunden sein. Im vorliegenden Ausführungsbeispiel ist die Projektionseinheit 33 mit einer Haltevorrichtung 45 an dem ersten Rahmenelement 29 angebracht. Die Projektionseinheit 33 kann derart an dem ersten Rahmenelement 29 angeordnet sein, dass die Projektionseinheit 33 in dem Hohlraum 37 angeordnet ist oder zumindest abschnittsweise in den Hohlraum 37 hineinragt. Die Projektionseinheit 33 kann aber auch außerhalb des Hohlraums 37 angeordnet sein. Die Optikeinheit 39 ist der Projektionseinheit 33 im Wesentlichen gegenüberliegend angeordnet, so dass, wie oben bereits erwähnt ist, Lichtstrahlen 40, die von der Projektionseinheit 33 generiert und ausgegeben werden, über die Optikeinheit 39 auf die Projektionsfläche 20 geleitet werden.

Die Projektionseinheit 33 umfasst im Wesentlichen eine Rechnereinheit 47 und einen Projektor 49. Die Rechnereinheit 47 ist zu einer Ansteuerung des Projektors 49 vorgesehen. Die Rechnereinheit 47 ist dazu vorgesehen, das Projektionsbild 23 das von dem Projektor 49 abgestrahlt werden soll, zu berechnen. Weiterhin umfasst die Projektionseinheit 33 eine Steuerungseinheit 51. Die Steuerungseinheit 51 ist dazu vorgesehen, den Projektor 49 anzusteuern. Die Steuerungseinheit 51 kann beispielsweise eine LCoS-Steuerungseinheit oder eine Steuereinheit, die einen DLP-Projektionschip oder DLP-Projektor Chip umfasst, sein. Die Steuerungseinheit 51 ist dazu vorgesehen, ein durch die Rechnereinheit 47 berechnetes Projektionsbild 23 derart darzustellen, dass der Projektor 49 das Projektionsbild 23 durch ein Ansteuern der Steuerungseinheit 51 ausgeben kann, beziehungsweise ist die Steuerungseinheit 51 dazu vorgesehen, ein durch die Rechnereinheit 47 berechnetes Projektionsbild 23 derart auszugeben, dass der Projektor 49 das Projektionsbild 23 durch ein Bestrahlen der Optikeinheit 39 beziehungsweise der Projektionsfläche 20 darstellen kann. Um einer Überhitzung der Projektionseinheit 33 vorzubeugen, ist eine Kühleinheit 53 in der Projektionseinheit 33 ausgebildet. Die Kühleinheit 53 ist dazu vorgesehen, zumindest eine Komponente der Projektionseinheit 33, wie zum Beispiel den Projektor 49, die Rechnereinheit 47 und/oder die Steuerungseinheit 51, zu kühlen.

An dem zweiten Rahmenelement 31 ist in dem Ausführungsbeispiel in Fig. 3 beispielsweise ein Griffelement 55 ausgebildet. Des Weiteren können noch weitere Rahmenelemente ausgebildet sein, die beispielsweise eine Steifigkeit der Türeinheit 13 erhöhen oder designprägend ausgebildet sind.

In Fig. 4 ist eine Schnittdarstellung einer möglichen Ausführungsform einer Türeinheit 13 eines Wäschepflegegeräts 3 dargestellt. Die Optikeinheit 39, insbesondere das Halteelement 41 der Optikeinheit 39, ist hier beispielhaft in einem oberen Bereich des Fensterelements 35 beziehungsweise in einem oberen Bereich an dem Fensterelement 35 angebracht. Einem Bediener beziehungsweise einem Benutzer ist somit weiterhin die Möglichkeit zur Durchsicht durch das Sichtfenster 19 und das Fensterelement 35 hinein in den Aufnahmebehälter 6 gegeben.

Beispielhaft sei erwähnt, dass im Bereich der Projektionsfläche 20 eine Interaktionsfläche 57 denkbar ist, so dass ein Benutzer mittels der Interaktionsfläche Einstellungen an dem Wäschepflegegerät 3 vornehmen kann.

Die Optikeinheit 39 ist in Fig. 4 beispielhaft in einem oberen Bereich des Fensterelements 35 angeordnet und derart ausgerichtet, dass Lichtstrahlen 40 die von der Projektionseinheit 33 ausgestrahlt werden, auf die Projektionsfläche 20 beziehungsweise auf die Interaktionsfläche 57 projiziert werden. Beispielhaft ist die Projektionsfläche 20 beziehungsweise die Interaktionsfläche 57 in einem oberen Bereich des Sichtfensters 19 angeordnet. Denkbar ist aber auch, dass die Projektionsfläche 20 beziehungsweise die Interaktionsfläche 57 im Wesentlichen auf dem gesamten Sichtfenster 19 ausgebildet ist. Die Optikeinheit 39 kann mittels verschiedener Befestigungs- und/oder Verbundmethoden beziehungsweise Verbundtechniken an dem Fensterelement 35 angeordnet sein beziehungsweise befestigt sein.

Die Projektionsfläche 20 wird mit dem Siebdruckverfahren hergestellt. Zum Erzeugen einer Projektionsfläche 20, wird bei dem Siebdruckverfahren eine dünne Farbschicht mit einer hellen, insbesondere weißen Farbe auf dem Sichtfenster 19 aufgespritzt beziehungsweise aufgetragen. Eine Tönungsschicht 25 wird vorzugsweise ebenfalls mit dem Siebdruckverfahren auf dem Sichtfenster 19 aufgespritzt beziehungsweise aufgetragen. Die Tönungsschicht 25 kann vorzugsweise eine dunkle Farbe sein, so dass ein Tönungseffekt eintritt. Der Maskierungsrand 27 ist vorzugsweise blickdicht auf dem Sichtfenster 19 aufgetragen. Wichtig dabei ist jedoch, dass das Sichtfenster 19 nach Aufbringen der Projektionsfläche 20 und/oder der Tönungsschicht 25 im Wesentlichen transparent bleibt.

Das Sichtfenster 19 kann als klares Plattenmaterial bezogen werden und anschließend mit dem Siebdruckverfahren bearbeitet werden. Die Projektionsfläche 20 und die Tönungsschicht 25 sind vorzugsweise an der Innenseite 28a des Sichtfensters 19 aufgetragen. Der Maskierungsrand 27 kann auf einer Außenseite 28b des Sichtfensters 19 aufgetragen sein.

Vorteilhafterweise wird zumindest eine helle Farbe für das Siebdruckverfahren verwendet. Die mindestens eine helle Farbe kann sich aus mehreren verschiedenen Weißtönen zusammensetzen. Es ist aber auch denkbar, dass nur ein Weißton verwendet wird. Besonders geeignet ist hier eine UV-härtende Farbe und/oder ein UV-härtender Lack. Eine UV-härtende Farbe und/oder ein UV-härtender Lack weisen im Wesentlichen unter anderem die besondere Eigenschaft auf, dass sie auf PMMA-Materialien, Glas und anderen Materialien gut haften.

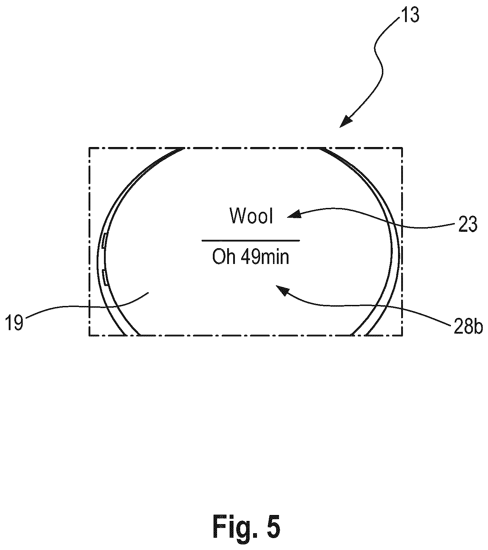

In Fig. 5 ist beispielhaft ein Ausschnitt eines (zumindest teilweise) mit dem Siebdruckverfahren bedruckten Sichtfensters 19 einer Türeinheit 13 eines Wäschepflegegeräts 3 gezeigt. Auf der Projektionsfläche 20 wird beispielsweise ein Projektionsbild 23 angezeigt, das ein Wäschepflegeprogramm namens Wool (deutsch: Wolle) und darunter eine Restlaufzeit des Wäschepflegeprogramms von 0h und 49min anzeigt.

Das Sichtfenster 19 ist mit einem Farbauftrag, der mit dem Siebdruckverfahren erstellt ist, beaufschlagt. Mit anderen Worten gesagt, es wird ein Farbfilm 58 oder eine Farbschicht (beispielhaft in Fig. 4 dargestellt) auf dem Sichtfenster 19 aufgetragen. Der Farbfilm 58 kann mit einer bestimmten Intensität aufgetragen werden, was bedeutet, dass der Farbfilm 58 hauchdünn, kaum wahrnehmbar, aber auch sehr kräftig sein kann. Natürlich kann der Farbfilm 58 auch mit der Intensität zwischen hauchdünn und kräftig aufgetragen werden.

Die Projektionsfläche 20 wird in dem Ausführungsbeispiel in Fig. 5 direkt auf das Sichtfenster 19 gedruckt. Die Projektionsfläche 20 wird auf der Innenseite 28a des Sichtfensters 19 aufgedruckt. Die Druckintensität ist derart gewählt, dass nach einem Bedrucken des Sichtfensters 19 die transparenten Eigenschaften des Sichtfensters 19 beibehalten werden. Dem Fachmann ist jedoch bewusst, dass eine höhere Farbintensität eine bessere Projektionsqualität auf der Projektionsfläche 20 liefert. Je nachdem, welche Kriterien wichtiger erscheinen, kann die Farbintensität des Druckgeräts insbesondere des Siebdruckgeräts verändert beziehungsweise eingestellt werden.

Im vorliegenden Beispiel wird die Farbintensität derart gewählt beziehungsweise der Farbfilm 58 derart aufgetragen, dass an dem Sichtfenster 19 beziehungsweise an der Sichtscheibe 19 ein gut sichtbares Projektionsbild 23 dargestellt wird, aber auch eine Durchsicht in den Aufnahmebehälter 6 des Wäschepflegegeräts ermöglicht wird. Somit wird ein Farbfilm 58 beziehungsweise Farbschicht auf dem Sichtfenster 19 aufgetragen, der für das menschliche Auge zwar wahrnehmbar ist, aber nicht sichteinschränkend ist.

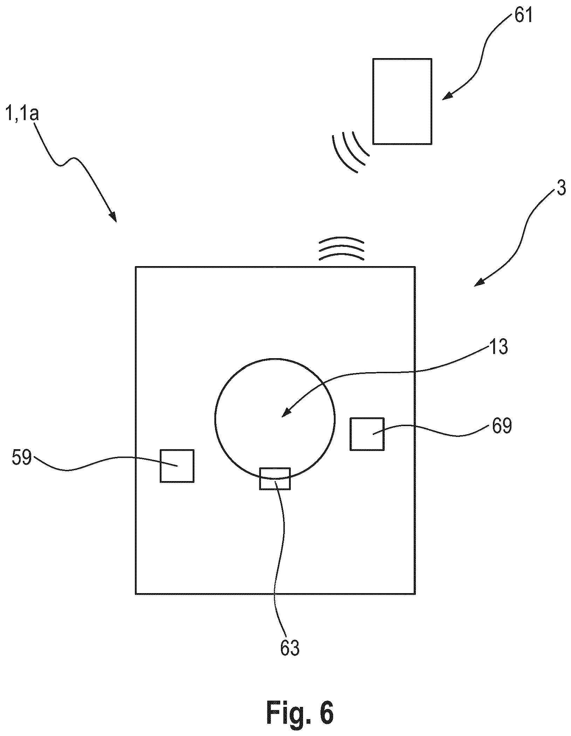

In Fig. 6 ist ein weiteres Ausführungsbeispiel eines fluidführenden Haushaltsgeräts 1a, in Form eines Wäschepflegegeräts 3, dargestellt. Das fluidführende Haushaltsgerät 1a weist in dem in Fig. 6 gezeigten Ausführungsbeispiel ein internes Gerät 59 und/oder externes Gerät 61 zum Kommunizieren eines Bedieners beziehungsweise Benutzers mit einem fluidführenden Haushaltsgerät 1a auf. Das interne Gerät 59 und/oder externe Gerät 61 kann ein Tablet, Smartphone oder dergleichen sein. Wichtig ist, dass das interne Gerät 59 und/oder das externe Gerät 61 eine berührungsempfindliche Fläche und/oder eine berührungsempfindliche Anzeige zum Anzeigen und Einstellen von Betriebs- und/oder Programmparametern umfasst.

Das fluidführende Haushaltsgerät 1a weist eine Kommunikationseinheit 63 auf. Die Kommunikationseinheit 63 ist in Verbindung mit dem internen Gerät 59 und/oder dem externen Gerät 61 und kommuniziert mit dem internen Gerät 59 und/oder dem externen Gerät 61. Die Kommunikationseinheit 63 ist derart eingerichtet, dass zumindest Projektionsbilder 23 und/oder das Betätigungselement 17 auf das internen Gerät 59 und/oder das externe Gerät 61 übertragbar sind. Dadurch kann die Projektionsfläche 20 des fluidführenden Haushaltsgeräts 1a und/oder des Wäschepflegegeräts 3 auf dem internen Gerät 59 und/oder dem externen Gerät 61 dargestellt werden. Vorstellbar ist aber auch, dass das externe Gerät 61 an dem fluidführenden Haushaltsgerät 1a anbringbar ist beziehungsweise dass ein internes Gerät 59 in und/oder an dem fluidführenden Haushaltsgerät 1a ausgebildet ist. Das interne Gerät 59 kann ähnliche Eigenschaften wie das externe Gerät 61 aufweisen.

Des Weiteren ist die Kommunikationseinheit 63 derart eingerichtet, dass die Kommunikationseinheit 63 Eingabebefehle von dem internen Gerät 59 und/oder externen Gerät 61 empfängt und die Eingabebefehle an eine Steuerungsvorrichtung 69 übermittelt. Die Steuerungsvorrichtung dient zum Ansteuern des fluidführenden Haushaltsgeräts 1a, aber auch zum Ansteuern der Projektionseinheit 39 und deren Komponenten. Dadurch wird dem Bediener die Möglichkeit gegeben, mit dem fluidführenden Haushaltsgerät 1a und/oder der Waschmaschine 3 zu kommunizieren, ohne direkt an dem fluidführenden Haushaltsgerät 1a und/oder der Waschmaschine 3 einen Eingabebefehl einzugeben.

Das externe Gerät 61 kann ein Smartphone oder ein Tablet sein, auf dem graphisch die Projektionsbilder 23 dargestellt werden können. Ein Bedienen des fluidführenden Haushaltsgeräts 1a über das externe Gerät 61 ist auch vorstellbar. Das interne Gerät 59 kann ein Prozessor sein. Es ist aber auch vorstellbar, dass das interne Gerät 59 ein Smartphone oder ein Tablet ist, das mit dem fluidführenden Haushaltsgerät 1a abnehmbar verbunden ist oder fest mit dem fluidführenden Haushaltsgerät 1a verbunden ist. Eigenschaften des internen Geräts 59 können identisch zu Eigenschaften des externen Geräts 61 sein.

Die Kommunikationseinheit 63 kann beispielsweise in der Türeinheit 13 eines fluidführenden Haushaltsgerät 1a beziehungsweise eines Haushaltsgeräts 1 angeordnet sein. Die Kommunikationseinheit 63 kann aber auch im Gehäuse oder am Gehäuse des fluidführenden Haushaltsgeräts 1a und/oder der Waschmaschine 3 angeordnet sein. Vorteilhafterweise sollte die Kommunikationseinheit 63 im Bereich der Projektionseinheit 39 angeordnet sein. Vorstellbar ist aber auch, dass die Kommunikationseinheit 63 in die Projektionseinheit 39 integriert ist. Die Kommunikationseinheit 63 kann mit der Projektionseinheit 39 kabellos und/oder mit einer elektrischen Verbindung verbunden sein.

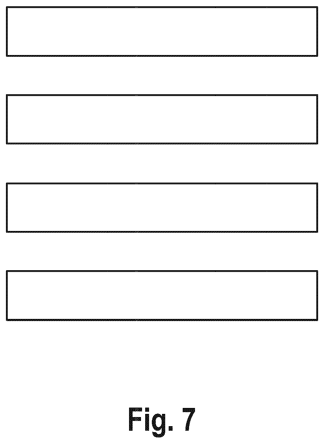

In Fig. 7 wird kurz schematisch ein Verfahren zum Herstellen eines Haushaltsgeräts 1, 100 und/oder fluidführenden Haushaltsgeräts 1a mit einer Projektionsfläche 20, 120 gezeigt beziehungsweise beschrieben und/oder wie ein Sichtfenster 19, 119 mit einer Projektionsfläche 20, 120 mit dem Siebdruckverfahren entstehen kann.

Besonders kostengünstig ist es, plattenförmiges Material/Werkstücke und/oder scheibenartige Elemente für die Herstellung des Sichtfensters 19, 119 und/oder der Projektionsfläche 20, 120 zu wählen. Das plattenförmige Material oder Werkstück ist vorzugsweise ein klares, durchsichtiges plattenförmiges Werkstück, das im Wesentlichen beschichtungsfrei ist, also keine Beschichtung aufweist. Plattenförmiges Material und/oder scheibenartige Elemente sind gut geeignet, um zugeschnitten, Formen auszuschneiden, in einen Drucker eingelegt und bedruckt zu werden. Des Weiteren lässt sich ein plattenförmiges Material leicht an die gewünschte Form anpassen, wodurch beispielsweise eine leichte Biegung in das plattenförmige Material eingebracht werden kann. Weitere Behandlungsmöglichkeiten des plattenförmigen Materials sind denkbar.

Das Werkstück wird als plattenförmiges Material und/oder scheibenartiges Element angeliefert. Das Werkstück ist vorzugsweise derart ausgebildet, dass es im Wesentlichen einer Höhe H einer gewünschten Vorderseite 7b, 107b eines Haushaltsgeräts 1, 100 und/oder fluidführenden Haushaltsgeräts 1a und/oder Wäschepflegegeräts 3 entspricht. Das Werkstück wird gleichzeitig für das Frontwandelement 7a, 107a verwendet.

Aus dem plattenförmigen Werkstück oder dem scheibenartigen Element wird ein gewünschtes Element, nämlich das Sichtfenster 19, 119, herausgelöst beziehungsweise herausgeschnitten. Das Werkstück umfasst nun eine Öffnung 11, 111 beziehungsweise ein Loch oder eine Durchgangsöffnung, durch die/das die Türeinheit 13, 113 bei einem fertig produzierten Haushaltsgerät 1, 100 ragt, beziehungsweise in der/dem die Türeinheit 13, 113 bei einem fertig produzierten Haushaltsgerät 1, 100 angeordnet ist. Die Öffnung 11, 111 beziehungsweise das Loch, das beim Herauslösen des Sichtfensters 19, 119 aus dem Werkstück entsteht, umgibt im Wesentlichen die Türeinheit 13, 113 beziehungsweise ist die Türeinheit 13, 113 im Bereich der Öffnung 11, 111 oder des Lochs oder der Durchgangsöffnung bei einem fertig produzierten Haushaltsgerät 1, 100 angeordnet.

Das herausgelöste beziehungsweise herausausgeschnittene Sichtfenster 19, 119 wird weiterhin mit dem Siebdruckverfahren bearbeitet. Bei dem gewählten beziehungsweise gewünschten Siebdruckverfahren wird zumindest ein Teilbereich 21, 121 des Sichtfensters 19, 119 direkt mit mindestens einer Farbe bedruckt beziehungsweise beaufschlagt, wodurch ein mit dem menschlichen Auge kaum wahrnehmbarer Farbfilm 58 auf dem Sichtfenster 19, 119 entsteht. Es ist vorstellbar, dass in einem ersten Schritt mit dem Siebdruckverfahren zunächst eine Schicht oder ein Farbfilm 58 mit dunkler Farbe auf dem Sichtfenster 19, 119 aufgebracht wird. In einem weiteren Schritt des Siebdruckverfahrens wird anschließend eine Schicht oder ein Farbfilm 58 mit einer hellen Farbe auf dem Sichtfenster 19, 119 aufgetragen beziehungsweise aufgebracht. Die dunkle Farbe ist für die Tönungsschicht 25 vorgesehen und die helle Farbe für die Projektionsfläche 20. Die Tönungsschicht 25 kann als ein Muster ausgebildet sein und beispielsweise aus vielen kleinen Punkten bestehen. Weitere Muster sind denkbar.

Das bedruckte Sichtfenster 19, 119 kann anschließend zur Weiterverarbeitung hergenommen werden. Dies kann beispielsweise auch ein Biegen des Sichtfensters 19, 119 und/oder ein Auftragen eines Maskierungsrandes 27 beinhalten. Das bedruckte Sichtfenster 19 wird anschließend an der Türeinheit 13, 113 montiert beziehungsweise befestigt. Die fertige Türeinheit 13, 113 kann anschließend drehbar oder schwenkbar oder kippbar an dem Haushaltsgerät 1, 100 befestigt werden. Vor oder nach dem Montieren der Türeinheit 13, 113 kann das Werkstück, das Frontwandelement 7a, 107a mit der enthalten Öffnung 11, 111 oder Loch oder Durchgangsöffnung an dem Haushaltsgerät 1, 1a, 100 montiert werden.

Die oben dargelegten Ausführungsbeispiele sowie das in Fig. 7 beschriebene Verfahren sind sowohl für ein Haushaltsgerät 1, 100, als auch für ein fluidführendes Haushaltsgerät 1a, wie beispielsweise eine Wäschepflegegerät 3, zu lesen und sind nicht auf ein jeweiliges beispielhaft genanntes Haushaltsgerät 1 oder 1a oder 3 oder 100 eingeschränkt.

## Patentansprüche

1. Haushaltsgerät (1, 100), wobei das Haushaltsgerät (1, 100) umfasst:
ein Gehäuse (5, 105) mit einem Aufnahmebehälter (6, 106) und einer Öffnung (11, 111);
eine Türeinheit (13, 113), wobei die Türeinheit (13, 113) zum Verschließen der Öffnung (11, 111) vorgesehen ist,
ein Sichtfenster (19, 119), das im Wesentlichen in der Türeinheit (13, 113) angeordnet ist, wobei das Sichtfenster (19, 119) im Wesentlichen transparent ausgebildet ist, sodass der Aufnahmebehälter (6, 106) bei verschlossener Öffnung (11, 111) einsehbar ist,
eine Projektionsfläche (20, 120), wobei die Projektionsfläche (20, 120) im Bereich des Sichtfensters (19, 119) vorgesehen ist,
eine Frontwandbaugruppe (7, 107), wobei die Frontwandbaugruppe (7, 107) mindestens ein Frontwandelement (7a, 107a) umfasst,
**dadurch gekennzeichnet, dass**
das Sichtfenster (19, 119) der Türeinheit (13, 113) und das mindestens eine Frontwandelement (7a, 107a) aus demselben Werkstück geformt sind, und dass auf dem Sichtfenster (19, 119) die Projektionsfläche (20, 120) mit einem Siebdruckverfahren erzeugbar ist, so dass die Projektionsfläche (20, 120) und das Sichtfenster (19, 119) im Wesentlichen weiterhin transparent sind.

2. Haushaltsgerät (1, 100) nach Anspruch 1, **dadurch gekennzeichnet, dass** das Sichtfenster (19, 119) und das mindestens eine Frontwandelement (7a, 107a) der Frontwandbaugruppe (7, 107) im Wesentlichen aus Glas und/oder im Wesentlichen aus mindestens einem Polymer gebildet sind, wobei das Sichtfenster (19, 119) und das mindestens eine Frontwandelement (7a, 107a) der Frontwandbaugruppe (7, 107) in einem unbearbeiteten Zustand im Wesentlichen farblos und durchsichtig sind.

3. Haushaltsgerät (1, 100) nach Anspruch 1 oder 2, **dadurch gekennzeichnet, dass** an dem Sichtfenster (19, 119) im Wesentlichen ein Maskierungsrand (27), eine Tönungsschicht (25) und die Projektionsfläche (20, 120) aufgetragen sind, wobei der Maskierungsrand (27) im Randbereich des Sichtfensters (19, 119) angeordnet ist und im Wesentlichen umlaufend ausgebildet ist.

4. Haushaltsgerät (1, 100) nach Anspruch 3, **dadurch gekennzeichnet, dass** die Tönungsschicht (25) und/oder der Maskierungsrand (27) des Sichtfensters (19, 119) mit dem Siebdruckverfahren erzeugbar sind, wobei der Maskierungsrand (27) im Wesentlichen blickdicht ist und wobei die Tönungsschicht (25) im Wesentlichen transparent ausgebildet ist.

5. Haushaltsgerät (1, 100) nach einem der vorangehenden Ansprüche, **dadurch gekennzeichnet, dass** das Sichtfenster (19, 119) an der Türeinheit (13, 113) anbringbar ist und dass das mindestens eine Frontwandelement (7a, 107a) der Frontwandbaugruppe (7, 107) an dem Haushaltsgerät (1, 100) anbringbar ist.

6. Haushaltsgerät (1, 100) nach einem Ansprüche 3 bis 5, **dadurch gekennzeichnet, dass** die Tönungsschicht (25) zumindest abschnittsweise auf dem Sichtfenster (19, 119) aufgetragen ist.

7. Haushaltsgerät (1, 100) nach einem der Ansprüche 3 bis 6, **dadurch gekennzeichnet, dass** sich die Tönungsschicht (25) im Wesentlichen über das gesamte Sichtfenster (19, 119) erstreckt.

8. Haushaltsgerät (1, 100) nach einem der vorangehenden Ansprüche, **dadurch gekennzeichnet, dass** die Projektionsfläche (20, 120) zumindest abschnittsweise auf dem Sichtfenster (19, 119) aufgetragen ist.

9. Haushaltsgerät (1, 100) nach einem der Ansprüche 1 bis 7, **dadurch gekennzeichnet, dass** sich die Projektionsfläche (20, 120) im Wesentlichen über das gesamte Sichtfenster (19, 119) erstreckt.

10. Verfahren zum Herstellen eines Haushaltsgeräts (1, 100) mit einer Projektionsfläche (20, 120), wobei das Haushaltsgerät (1, 100) im Wesentlichen ein Gehäuse (5, 105) mit einem Aufnahmebehälter (6, 106) und einer Öffnung (11, 111), eine Türeinheit (13, 113), ein Sichtfenster (19, 119), eine Projektionsfläche (20, 120) und eine Frontwandbaugruppe (7, 107) mit mindestens einem Frontwandelement (7a, 107a) umfasst,
wobei die Türeinheit (13, 113) zum Verschließen der Öffnung (11, 111) vorgesehen ist,
wobei das Sichtfenster (19, 119) im Wesentlichen in der Türeinheit (13, 113) angeordnet ist und wobei das Sichtfenster (19, 119) im Wesentlichen transparent ausgebildet ist, sodass der Aufnahmebehälter (6, 106) bei verschlossener Öffnung (11, 111) einsehbar ist,
wobei die Projektionsfläche (20, 120) im Bereich des Sichtfensters (19, 119) vorgesehen ist,
und wobei das mindestens eine Frontwandelement (7a, 107a) an einer Vorderseite (7b, 107b) des Haushaltsgerät (1, 100) angeordnet ist, wobei
das Verfahren zum Herstellen einer Projektionsfläche (20, 120) umfasst:
- Herauslösen des Sichtfensters (20, 120) aus dem mindestens einen Frontwandelement (7a, 107a), so dass im Wesentlichen ein rundes Sichtfenster (19, 119) entsteht und das mindestens eine Frontwandelement (7a, 107a) die Öffnung (11, 111) aufweist,
- Aufbringen der Projektionsfläche (20, 120) auf dem Sichtfenster (19, 119) mit einem Siebdruckverfahren;
- Anbringen des Sichtfensters (19, 119) mit der aufgebrachten Projektionsfläche (20, 120) an der Türeinheit (13, 113);
- Montieren der Türeinheit (13, 113) und des mindestens einen Frontwandelements (7a, 107a) an dem Haushaltsgerät (1, 100).

11. Verfahren nach Anspruch 10, **dadurch gekennzeichnet, dass** das Sichtfenster (19, 119) eine Tönungsschicht (25) umfasst, wobei die Tönungsschicht (25) mit dem Siebdruckverfahren auf dem Sichtfenster (19, 119) aufgetragen wird.

12. Verfahren nach Anspruch 11, **dadurch gekennzeichnet, dass** die Tönungsschicht (25) und die Projektionsfläche (20, 120) zumindest abschnittsweise auf dem Sichtfenster (19, 119) aufgetragen werden.

13. Verfahren nach einem der Ansprüche 10 bis 12, **dadurch gekennzeichnet, dass** das mindestens eine Frontwandelement (7a, 107a) nach dem Herauslösen des Sichtfensters (19, 119) die Öffnung (11, 111) aufweist und eine Beschichtung auf dem mindestens einen Frontwandelement (7a, 107a) aufgebracht wird.

## Claims

1. Household appliance (1, 100), wherein the household appliance (1, 100) comprises:
a housing (5, 105) with an accommodating container (6, 106) and an opening (11, 111);
a door unit (13, 113), wherein the door unit (13, 113) is provided for closing off the opening (11, 111),
a viewing window (19, 119), which is arranged substantially in the door unit (13, 113),
wherein the viewing window (19, 119) is embodied as substantially transparent, so that it is possible to look into the accommodating container (6, 106) when the opening (11, 111) is closed off,
a projection area (20, 120), wherein the projection area (20, 120) is provided in the region of the viewing window (19, 119),
a front wall assembly (7, 107), wherein the front wall assembly (7, 107) comprises at least one front wall element (7a, 107a),
**characterised in that**
the viewing window (19, 119) of the door unit (13, 113) and the at least one front wall element (7a, 107a) are shaped from the same workpiece, and the projection area (20, 120) can be generated on the viewing window (19, 119) using a screen printing method, so that the projection area (20, 120) and the viewing window (19, 119) are furthermore substantially transparent.

2. Household appliance (1, 100) according to claim 1, **characterised in that** the viewing window (19, 119) and the at least one front wall element (7a, 107a) of the front wall assembly (7, 107) are substantially formed from glass and/or are substantially formed from at least one polymer, wherein the viewing window (19, 119) and the at least one front wall element (7a, 107a) of the front wall assembly (7, 107) are substantially colourless and transparent when in an unprocessed state.

3. Household appliance (1, 100) according to claim 1 or 2, **characterised in that** a masking border (27), a tint layer (25) and the projection area (20, 120) are substantially applied to the viewing window (19, 119), wherein the masking border (27) is arranged in the border area of the viewing window (19, 119) and is embodied as substantially circumferential.

4. Household appliance (1, 100) according to claim 3, **characterised in that** the tint layer (25) and/or the masking border (27) of the viewing window (19, 119) can be generated using the screen printing method, wherein the masking border (27) is substantially opaque and wherein the tint layer (25) is embodied as substantially transparent.

5. Household appliance (1, 100) according to one of the preceding claims, **characterised in that** the viewing window (19, 119) can be attached to the door unit (13, 113) and the at least one front wall element (7a, 107a) of the front wall assembly (7, 107) can be attached to the household appliance (1, 100).

6. Household appliance (1, 100) according to one of claims 3 to 5, **characterised in that** the tint layer (25) is applied to the viewing window (19, 119) at least in some sections.

7. Household appliance (1, 100) according to one of claims 3 to 6, **characterised in that** the tint layer (25) extends substantially over the entire viewing window (19, 119).

8. Household appliance (1, 100) according to one of the preceding claims, **characterised in that** the projection area (20, 120) is applied to the viewing window (19, 119), at least in some sections.

9. Household appliance (1, 100) according to one of claims 1 to 7, **characterised in that** the projection area (20, 120) extends substantially over the entire viewing window (19, 119).

10. Method for producing a household appliance (1, 100) with a projection area (20, 120), wherein the household appliance (1, 100) substantially comprises a housing (5, 105) with an accommodating container (6, 106) and an opening (11, 111), a door unit (13, 113), a viewing window (19, 119), a projection area (20, 120) and a front wall assembly (7, 107) with at least one front wall element (7a, 107a),
wherein the door unit (13, 113) is provided for closing off the opening (11, 111),
wherein the viewing window (19, 119) is arranged substantially in the door unit (13, 113) and wherein the viewing window (19, 119) is embodied as substantially transparent, so that it is possible to look into the accommodating container (6, 106) when the opening (11, 111) is closed off,
wherein the projection area (20, 120) is provided in the region of the viewing window (19, 119),
and wherein the at least one front wall element (7a, 107a) is arranged on a front side (7b, 107b) of the household appliance (1, 100), wherein
the method for producing a projection area (20, 120) comprises:
- releasing the viewing window (19, 119) from the at least one front wall element (7a, 107a), so that a round viewing window (19, 119) substantially occurs and the at least one front wall element (7a, 107a) has the opening (11, 111),
- applying the projection area (20, 120) to the viewing window (19, 119) using a screen printing method;
- attaching the viewing window (19, 119) with the applied projection area (20, 120) to the door unit (13, 113);
- mounting the door unit (13, 113) and the at least one front wall element (7a, 107a) to the household appliance (1, 100).

11. Method according to claim 10, **characterised in that** the viewing window (19, 119) comprises a tint layer (25), wherein the tint layer (25) is applied to the viewing window (19, 119) using the screen printing method.

12. Method according to claim 11, **characterised in that** the tint layer (25) and the projection area (20, 120) are applied to the viewing window (19, 119), at least in some sections.

13. Method according to one of claims 10 to 12, **characterised in that** the at least one front wall element (7a, 107a) has the opening (11, 111) once the viewing window (19, 119) has been released and a coating is applied to the at least one front wall element (7a, 107a).

## Revendications

1. Appareil électroménager (1, 100), dans lequel l'appareil électroménager (1, 100) comprend :
une carrosserie (5, 105) comprenant une cuve de réception (6, 106) et une ouverture (11, 111),
une unité de porte (13, 113), l'unité de porte (13, 113) étant conçue pour fermer l'ouverture (11, 111),
un hublot d'inspection (19, 119), qui est disposé essentiellement dans l'unité de porte (13, 113), dans lequel le hublot d'inspection (19, 119) est sensiblement transparent,
de sorte que la cuve de réception (6, 106) est visible lorsque l'ouverture (11, 111) est fermée,
une surface de projection (20, 120), la surface de projection (20, 120) étant disposée dans la région du hublot d'inspection (19, 119), et
un ensemble de paroi avant (7, 107), l'ensemble de paroi avant (7, 107) comprenant au moins un élément de paroi avant (7a, 107a),
**caractérisé en ce que**
le hublot d'inspection (19, 119) de l'unité de porte (13, 113) et l'au moins un élément de paroi avant (7a, 107a) sont formés à partir de la même pièce, et **en ce que** la surface de projection (20, 120) peut être formée sur le hublot d'inspection (19, 119) au moyen d'un procédé de sérigraphie de telle sorte que la surface de projection (20, 120) et le hublot d'inspection (19, 119) continuent d'être essentiellement transparents.

2. Appareil électroménager (1, 100) selon la revendication 1, **caractérisé en ce que** le hublot d'inspection (19, 119) et l'au moins un élément de paroi avant (7a, 107a) de l'ensemble de paroi avant (7, 107) sont constitués essentiellement de verre et/ou essentiellement au moins d'un polymère, dans lequel le hublot d'inspection (19, 119) et l'au moins un élément de paroi avant (7a, 107a) de l'ensemble de paroi avant (7, 107) sont essentiellement incolores et translucides dans un état non traité.

3. Appareil électroménager (1, 100) selon la revendication 1 ou 2, **caractérisé en ce qu'**essentiellement un bord de masquage (27), une couche de coloration (25) et la surface de projection (20, 120) sont appliqués sur le hublot d'inspection (19, 119), dans lequel le bord de masquage (27) est disposé dans la région de bordure du hublot d'inspection (19, 119) et est formé essentiellement de manière périphérique.

4. Appareil électroménager (1, 100) selon la revendication 3, **caractérisé en ce que** la couche de coloration (25) et/ou le bord de masquage (27) du hublot d'inspection (19, 119) peuvent être formés au moyen du procédé de sérigraphie, dans lequel le bord de masquage (27) est essentiellement opaque et dans lequel la couche de coloration (25) est conçue de façon à être essentiellement transparente.

5. Appareil électroménager (1, 100) selon l'une des revendications précédentes, **caractérisé en ce que** le hublot d'inspection (19, 119) peut être fixé sur l'unité de porte (13, 113) et **en ce que** l'au moins un élément de paroi avant (7a, 107a) de l'ensemble de paroi avant (7, 107) peut être monté sur l'appareil électroménager (1, 100).

6. Appareil électroménager (1, 100) selon l'une des revendications 3 à 5, **caractérisé en ce que** la couche de coloration (25) est appliquée au moins par sections sur le hublot d'inspection (19, 119).

7. Appareil électroménager (1, 100) selon l'une des revendications 3 à 6, **caractérisé en ce que** la couche de coloration (25) s'étend essentiellement sur le hublot d'inspection (19, 119) entier.

8. Appareil électroménager (1, 100) selon l'une des revendications précédentes, **caractérisé en ce que** la surface de projection (20, 120) est appliquée au moins par sections sur le hublot d'inspection (19, 119).

9. Appareil électroménager (1, 100) selon l'une des revendications 1 à 7, **caractérisé en ce que** la surface de projection (20, 120) s'étend essentiellement sur le hublot d'inspection (19, 119) entier.

10. Procédé de fabrication d'un appareil électroménager (1, 100) comprenant une surface de projection (20, 120),
dans lequel l'appareil électroménager (1, 100) comprend essentiellement une carrosserie (5, 105) comprenant une cuve de réception (6, 106) et une ouverture (11, 111), une unité de porte (13, 113), un hublot d'inspection (19, 119), une surface de projection (20, 120) et un ensemble de paroi avant (7, 107) comprenant au moins un élément de paroi avant (7a, 107a),
dans lequel l'unité de porte (13, 113) est conçue pour fermer l'ouverture (11, 111),
dans lequel le hublot d'inspection (19, 119) est disposé essentiellement dans l'unité de porte (13, 113) et dans lequel le hublot d'inspection (19, 119) est configuré de façon à être sensiblement transparent, de sorte que la cuve de réception (6, 106) est visible lorsque l'ouverture (11, 111) est fermée,
dans lequel la surface de projection (20, 120) est disposée dans la région du hublot d'inspection (19, 119),
et dans lequel l'au moins un élément de paroi avant (7a, 107a) est disposé sur un côté avant (7b, 107b) de l'appareil électroménager (1, 100), dans lequel
le procédé de fabrication d'une surface de projection (20, 120) comprend :
- le détachement du hublot d'inspection (19, 119) à partir de l'au moins un élément de paroi avant (7a, 107a), de sorte qu'un hublot d'inspection (19, 119) essentiellement circulaire soit formé et que l'au moins un élément de paroi avant (7a, 107a) comprenne l'ouverture (11, 111),
- l'application de la surface de projection (20, 120) sur le hublot d'inspection (19, 119) au moyen d'un procédé de sérigraphie,
- la fixation du hublot d'inspection (19, 119) comprenant la surface de projection (20, 120) appliquée sur l'unité de porte (13, 113), et
- le montage de l'unité de porte (13, 113) et de l'au moins un élément de paroi avant (7a, 107a) sur l'appareil électroménager (1, 100).

11. Procédé selon la revendication 10, **caractérisé en ce que** le hublot d'inspection (19, 119) comprend une couche de coloration (25), dans lequel la couche de coloration (25) est appliquée sur le hublot d'inspection (19, 119) au moyen du procédé de sérigraphie.

12. Procédé selon la revendication 11, **caractérisé en ce que** la couche de coloration (25) et la surface de projection (20, 120) sont appliquées au moins par sections sur le hublot d'inspection (19, 119).

13. Procédé selon l'une des revendications 10 à 12, **caractérisé en ce que** l'au moins un élément de paroi avant (7a, 107a) comprend l'ouverture (11, 111) après l'enlèvement du hublot d'inspection (19, 119) et un revêtement est appliqué sur l'au moins un élément de paroi avant (7a, 107a).
